# EUROPÄISCHE PATENTSCHRIFT

(11) **EP 0 703 012 B1**
(45) Veröffentlichungstag und Bekanntmachung des Hinweises auf die Patenterteilung: **04.03.1998**
(21) Anmeldenummer: 95111380.2
(22) Anmeldetag: 20.07.1995
(51) Int. Cl.: B09B 1/00

(54) **Verfahren und Vorrichtung zum Verdichten einer Deponie aus vorverdichtetem Altmüll**
Method and device for compacting a dump of old pre-compressed waste
Procédé et dispositif pour compacter une décharge de déchets anciens pré-comprimés

(30) Priorität: 23.09.1994 DE 4433955
(43) Veröffentlichungstag der Anmeldung: 27.03.1996
(73) Patentinhaber: BRÜCKNER GRUNDBAU GMBH, 45356 Essen (DE)
(72) Erfinder: Triantafyllidis, Dr. Ing Theodor, D-76133 Karlsruhe (DE); Meding, Dipl. Ing Jochen, D-42555 Velbert (DE)
(74) Vertreter: Honke, Manfred, Dr.-Ing.

(56) Entgegenhaltungen:
- EP-A- 0 591 630
- DE-A- 4 303 518
- GB-A- 2 249 181
- US-A- 3 675 428

## Beschreibung

Die Erfindung betrifft ein Verfahren zum Verdichten einer Deponie aus vorverdichtetem Altmüll im Wege der Erschließung einer zusätzlichen Aufnahmekapazität für Frischmüll, wonach unter Bildung eines Hohlraumes ein wiederzuziehendes Rohr in die Deponie niedergebracht und der entstandene Hohlraum mit Frischmüll verfüllt und der Frischmüll mittels eines Fallgewichtes verdichtet wird.

Die zur Verfügung stehenden Deponieflächen für Müll, insbesondere Hausmüll, weisen begrenzte Kapazitäten auf, welche vielorts nahezu erschöpft sind. Die Bereitstellung von neuen Deponieflächen bereitet erhebliche Probleme, da geeignete Standorte relativ rar geworden sind und falls welche gefunden werden, der Widerstand der Anlieger mancherorts zur Schaffung einer neuen Deponie so groß ist, daß die Verwirklichung von neuen Deponien scheitert. Daher liegt es nahe, den Raum bereits bestehender Deponien optimal zu nutzen und die Kapazität für Frischmüll bereits existierender Deponien zu erhöhen, wobei das ursprüngliche Volumen der Deponie erhalten bleibt. Eine Möglichkeit, die Kapazität von bestehenden Deponien möglichst weitgehend zu erschöpfen und zusätzliche Aufnahmekapazitäten für Frischmüll zu erreichen, ist eine weitreichende und tiefenreichende Verdichtung durchzuführen. Diese Verdichtung hat den Vorteil, daß der Altmüll gleichzeitig verfestigt wird und ein zusätzlicher Raum für Frischmüll geschaffen wird, welcher dann auch in gleicher Weise optimal weiterverdichtet und verfestigt wird. So ist zum Verdichten und Einbringen von Müll in Deponien das Überrollen von Müll mit Hilfe von Walzen oder Vibrationsverdichtern oder entsprechenden Radladern angewendet worden. Ein solches Verdichtungsverfahren erfolgt meist lageweise und erzielt einen relativ geringen Verdichtungsgrad, der mit der Tiefe rasch abnimmt. Es handelt sich also um eine reine Oberflächenverdichtung. Es ist bekannt, daß Deponieanlagen von Müll eine relativ hohe Rückfederung aufweisen, so daß beim Überrollen während der Verdichtungsarbeit mit diesem Verfahren ein Teil dieser Arbeit durch ein seitliches Ausweichen des Mülls und sein elastisches Verhalten verloren geht.

Um in tieferen Bereichen von Mülldeponien zu verdichten, ist ein Verfahren entwickelt worden, das auf das Einvibrieren von an der Unterseite verschlossenen Rohren basiert, um nach dem Ziehen dieser Rohre Hohlräume zu schaffen, die dann mit neuem Müll aufgefüllt werden.

Dieses Verfahren hat sich aufgrund des angesprochenen elastischen Verhaltens von Müll als unwirtschaftlich erwiesen. Der Grund ist hauptsächlich in der relativ hohen Dämpfung, die während des Vibrierens vom geschlossenen Rohrfuß ausgeht, zu sehen. Diese hohe Dämpfung verursacht einen Widerstand gegen die Rohrpenetration und wächst mit steigendem Durchmesser überproportional. Bei größerem Durchmesser verursacht diese Dämpfung eine stehende Vibrationsbewegung und behindert die weitere Penetration. Um dies zu überwinden, müssen schwere schwingende Massen benutzt werden, die mit so hohen Energien bewegt werden müssen, daß das erzielte Ergebnis in keinem Verhältnis zur Wirtschaftlichkeit steht.

Weiterhin ist ein Verfahren bekannt, welches nach dem Prinzip der Rüttelstopfverdichtung arbeitet. Danach wird ein Tiefenrüttler eingesetzt, der in dem Müll bis auf die entsprechende Tiefe penetriert und auf diese Weise den Müll seitlich verdrängt. Es bildet sich auf der Mülloberfläche ein Trichter, dem frischer Müll hinzugefügt wird, mit dem Ziel, diesen Frischmüll mit Hilfe des Rüttlers weiter nach unten zu verdichten. Abgesehen davon, daß bei der Müllandienung die Trichterbildung regelmäßig nicht nachwandert, kann der zu verdichtende Frischmüll mit dem Rüttler nicht in einem einzigen Hub verdichtet werden. Vielmehr muß der Rüttler mehrmals hoch- und runtergefahren werden, da sich der Frischmüll an der Wand des aus Altmüll bestehenden Loches verhakt. Außerdem kann diese Verfahren nur funktionieren, wenn der Frischmüll eine relativ geringe Kantenlänge aufweist. Aufgrund der geringen Leistung und des hohen Verschleißes des Rüttlers ist dieses Verfahren ebenfalls unwirtschaftlich.

Ferner kennt man ein Verfahren der eingangs beschriebenen Ausführungsform, bei dem ein Verdrängerkörper zwecks Bildung eines Hohlraumes in die Deponie niedergebracht und danach wiedergezogen wird, erst nach dem Ziehen des Verdrängerkörpers wird der so entstandene Hohlraum mit frischem Müll verfüllt und der Frischmüll unter Verwendung eines Fallgewichtes verdichtet. Als Verdrängerkörper findet ein Rohr mit einer Gewindespitze Verwendung, welches unter Rotation um eine vertikale Achse sowie unter Einwirkung axialer Druckkräfte mittels eines Schraubvorganges in die Deponie eingedreht wird. Das Rohr wird unter Verwendung einer mit einer Hebevorrichtung zusammenwirkenden Rohrdrehmaschine in die Deponie eingeschraubt. - Bei diesem bekannten Verfahren stört, daß das Fallgewicht in dem rohrartigen Hohlraum arbeitet. Da es sich bei diesem Hohlraum um gleichsam ein ungeschütztes Bohrloch handelt, besteht die Gefahr, daß sich das Fallgewicht im Altmüllbereich verkantet, jedenfalls erheblich an Energie verliert, bevor der Frischmüll verdichtet werden kann. Folglich ist ein ungenügender Verdichtungsgrad nicht ausgeschlossen, so daß die Aufnahmekapazität für Frischmüll nicht hinreichend ausgenutzt werden kann (vgl. DE 43 03 518).

Der Erfindung liegt die Aufgabe zugrunde, ein Verfahren zum Verdichten einer Deponie aus vorverdichtetem Altmüll der eingangs beschriebenen Art anzugeben, wonach die Aufnahmekapazität für Frischmüll unter gleichzeitiger Erhöhung des Verdichtungsgrades in optimaler Weise unter Einsatz wirtschaftlicher Mittel genutzt wird.

Zur Lösung dieser Aufgabe lehrt die Erfindung bei einem gattungsgemäßen Verdichtungsverfahren, daß ein unten offenes Rohr niedergebracht wird und das Fallgewicht in dem Rohr operiert, daß das Rohr abschnittsweise bis zum Erreichen einer vorgegebenen Endtiefe in dem Altmüll vorgetrieben wird und nach Maßgabe des abschnittsweisen Rohrvortriebes Altmüll mittels des Fallgewichtes aus dem Rohr unten heraus und seitlich verdrängt wird, daß das Rohr nach Erreichen der Endtiefe abschnittsweise mit Frischmüll beschickt wird, daß das Rohr nach Maßgabe der Frischmüllbeschickung abschnittsweise gezogen und der Frischmüll mittels des Fallsgewichtes verdichtet wird, und daß dieser Vorgang sukzessive bis zum Erreichen der Deponieoberfläche wiederholt wird. - Im Rahmen der Erfindung kann die Endtiefe des Rohres durch die Verdichtbarkeitsgrenze vorgegeben sein, während Deponieoberfläche auch oberflächennahe Deponiebereiche meint. - Nach Lehre der Erfindung findet im Wege einer Tiefenverdichtung einerseits eine Verdichtung des Altmülls statt, welche über die aus dem bloßen Niederbringen des Rohres resultierende Verdichtung hinausgeht, findet andererseits eine Frischmüllverdichtung mit einem erhöhtem Verdichtungsgrad statt, weil das Fallgewicht stets einwandfrei in dem Rohr und folglich ohne Verkantungsgefahr arbeitet. Dadurch steht die Fallenergie des Fallgewichtes in vollem Umfang für die Frischmüllverdichtung zur Verfügung. Auf diese Weise wird im Ergebnis eine optimale Raumausnutzung erreicht. Tatsächlich wird im Rahmen der Erfindung durch die eingebrachte Energie Altmüll und Frischmüll innerhalb der Verrohrung nach unten und seitlich außerhalb der Verrohrung verdichtet. Der Vorgang mit dem Fallgewicht innerhalb der Verrohrung wird wiederholt bis das Fallgewicht erneut unterhalb oder gleich der Rohrunterkante liegt und die Endtiefe erreicht wird oder bis keine Verdichtung in der Tiefe mehr möglich ist. Stets wird das Rohr nur teilweise mit Frischmüll beschickt und teilweise gezogen, so daß das erneut unterhalb des Rohres fallende Fallgewicht des Frischmüll verdichtet. Die Verdichtung erfolgt solange bis die Einsenkung des Fallgewichtes im Frischmüll keine nennenswerte Veränderung gegenüber gegangenen Schläge mehr erzeugt und das Fallgewicht mit seiner Unterkante mindenstens auf dem gleichen Niveau wie die Rohrunterkante liegt. Der Vorgang des Verdichtens wiederholt sich bis fast an der Deponieoberfläche. Danach wird das Rohr aus dem Müll gezogen und in einer neuen Position angesetzt. Der Vorgang der Verdichtung von Alt- und Frischmüll vollzieht sich in gleicherweise in der neuen Position.

Weitere erfindungswesentliche Merkmale sind im folgenden aufgeführt. So kann das Rohr abschnittsweise gezogen werden während das Fallgewicht den jeweils eingefüllten Frischmüll verdichtet. Vorzugsweise wird die Oberfläche des jeweils verdichteten Altmülls und/oder Frischmülls über die Einsenkung des Fallgewichtes gemessen, zum Beispiel mittels Impulsgebern kontrolliert und aufgezeichnet. Auf diese Weise kann die Eindringtiefe des Fallgewichtes bei jedem Schlag automatisch erfaßt und bezogen auf die Geländeoberkante ermittelt werden. Eine graphische Anzeige in einem Monitor zeigt die erreichte Tiefe des Fallgewichtes sowie die Lager der Unterkante des unten offenen Rohres an, so daß die Verrohrung je nach Bedarf weiter nach unten niedergebracht wird und das Rohr tiefer in den Altmüll eindringt. In umgekehrter Weise kann bei dem Ziehen des Rohres verfahren werden, wenn die Oberfläche des jeweils verdichteten Frischmülls erfaßt wird. Weiter sieht die Erfindung vor, daß eine rasterartige Tiefenverdichtung mittels des Rohres und des Fallgewichtes vorgenommen wird, und daß zwischen den Tiefenverdichtungspunkten und ggf. über den Tiefenverdichtungspunkten eine Fallplattenverdichtung im oberflächennahen Bereich der Deponie durchgeführt wird. Eine optimale Rasteranordnung läßt sich aufgrund von Vorversuchen ermitteln, um eine wirtschaftliches Verdichten vor Ort durchzuführen zu können. Der Oberflächenbereich wird nach Abschluß der Tiefenverdichtung mit Hilfe einer Fallplatte und ohne Verrohrung verdichtet. Zweckmäßigerweise werden für die Fallplattenverdichtung solche Punkte im Verdichtungsraster gewählt, die zwischen den Punkten der Tiefenverdichtung liegen.

Gegenstand der Erfindung ist auch eine Vorrichtung zur Durchführung des erfindungsgemäßen Verfahrens, die sich durch eine besonders einfache und funktionsgerechte Bauweise auszeichnet. Diese Vorrichtung ist ein Rohr, dessen unten offenes Rohrende als ein mit Zähnen, Stiften oder dergleichen Vortriebswerkzeugen bestückter Rohrschuh ausgebildet ist, um auch harte Materialien durchdringen zu können. Ferner kann das unten offene Rohrende bzw. der Rohrschuh als sich außenseitig konisch verjüngendes Ende ausgebildet sein, wobei das Rohr innen zylindrisch und glatt ausgeführt ist. Das konische Rohrende weist zweckmäßigerweise außenseitig eine helixförmige Wendel unter Beibehaltung des Rohraußendurchmessers auf. Das obere offene Rohrende ist vorzugsweise als Trichter ausgebildet, um das Fallgewicht einwandfrei einführen zu können und die Beschickung des Rohres mit Frischmüll zu erleichtern. Das Rohr kann eine Länge bis zu 25 m aufweisen und einen Durchmesser bis zu 3 m besitzen. Es kann sich um einen einstückigen Rohrschuß oder um gekuppelte Rohrschüsse handeln.

Im folgenden wird die Erfindung anhand einer lediglich ein Ausführungsbeispiel darstellenden Zeichnung näher erläutert; es zeigen:

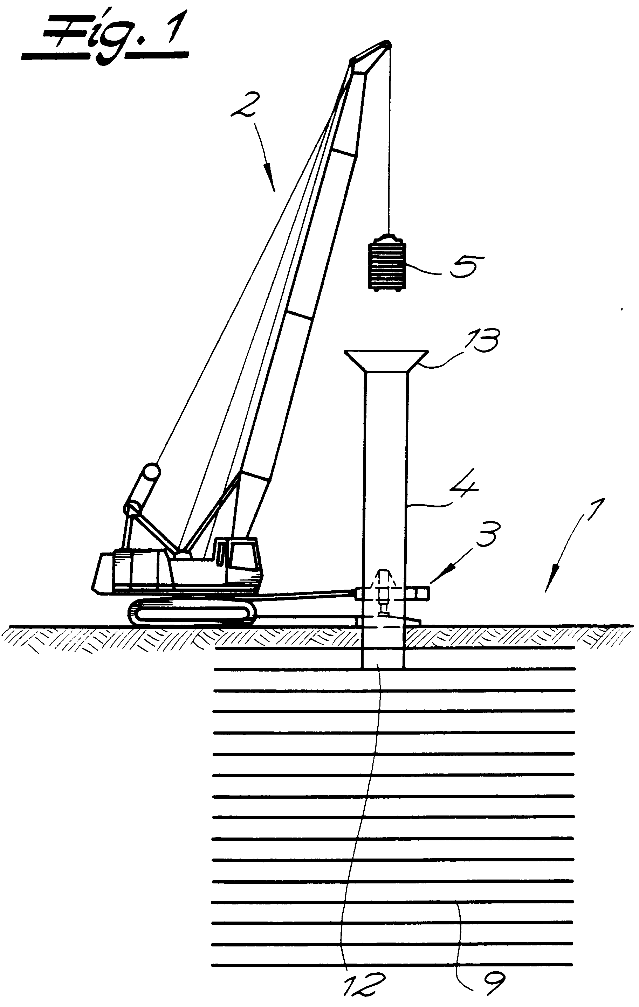

- Fig. 1: Einen Seilbagger mit einem Fallgewicht und einem auf einer angedeuteten Mülldeponie angesetztes Rohr,
- Fig. 2: den Gegenstand nach Fig. 1 nach dem Aufschlagen des Fallgewichtes innerhalb des Rohres,
- Fig. 3: den Gegenstand nach Fig. 1 nachdem das Rohr seine Endtiefe erreicht hat und Frischmüll verdichtet wird,

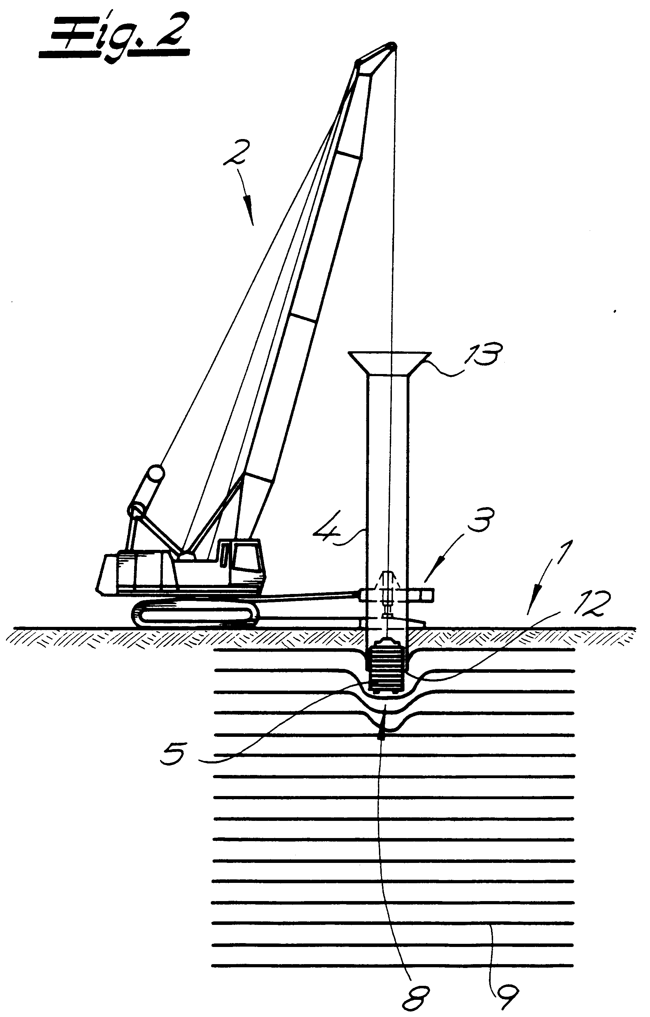

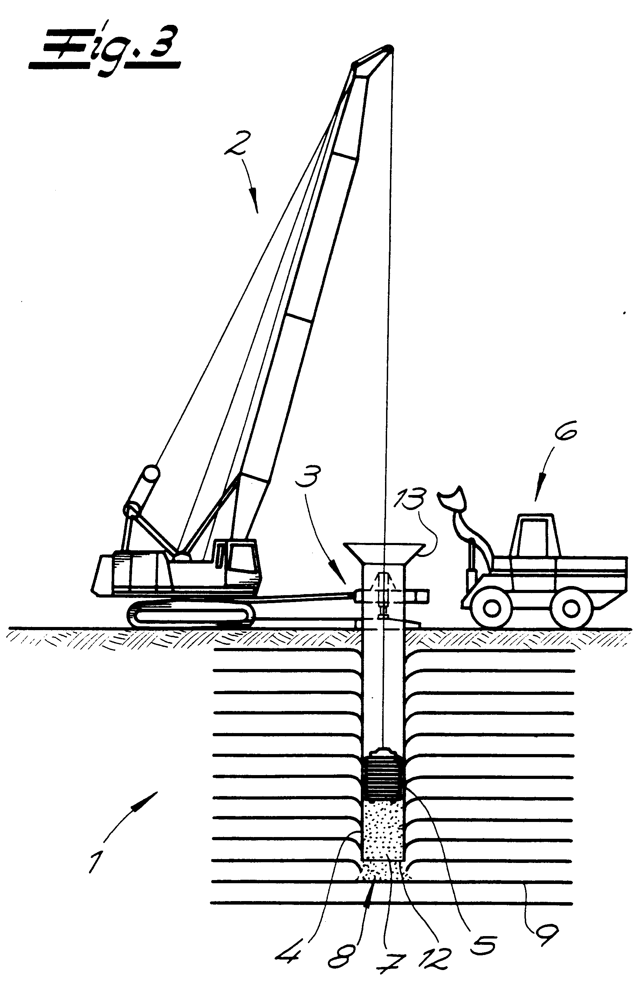

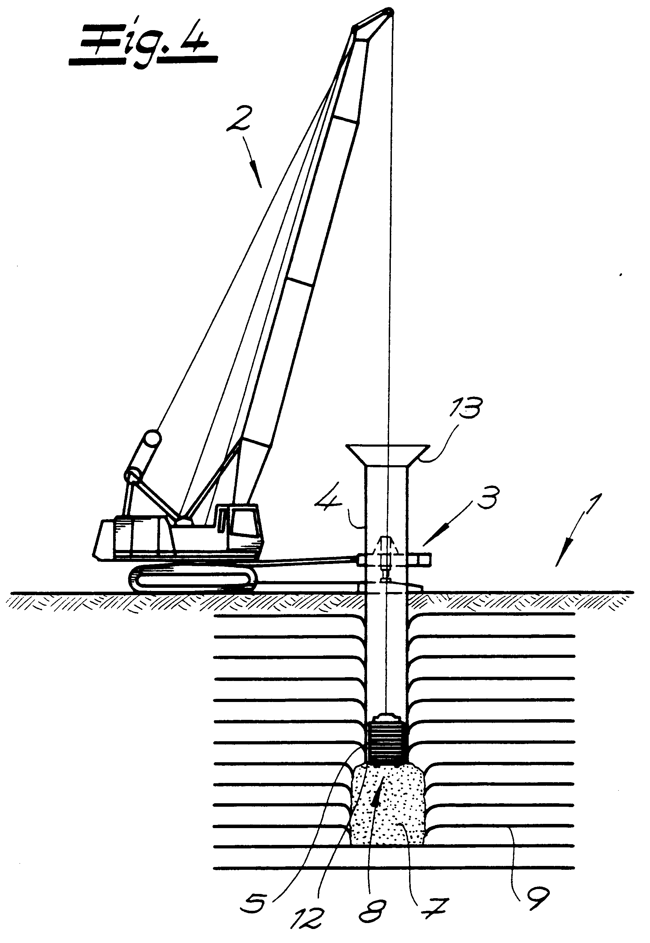

- Fig. 4: den Gegenstand nach Fig. 3, wonach verdichteter Frischmüll teilweise im Altmüll verdichtet ist, bevor das Rohr neu mit Frischmüll beschickt wird,

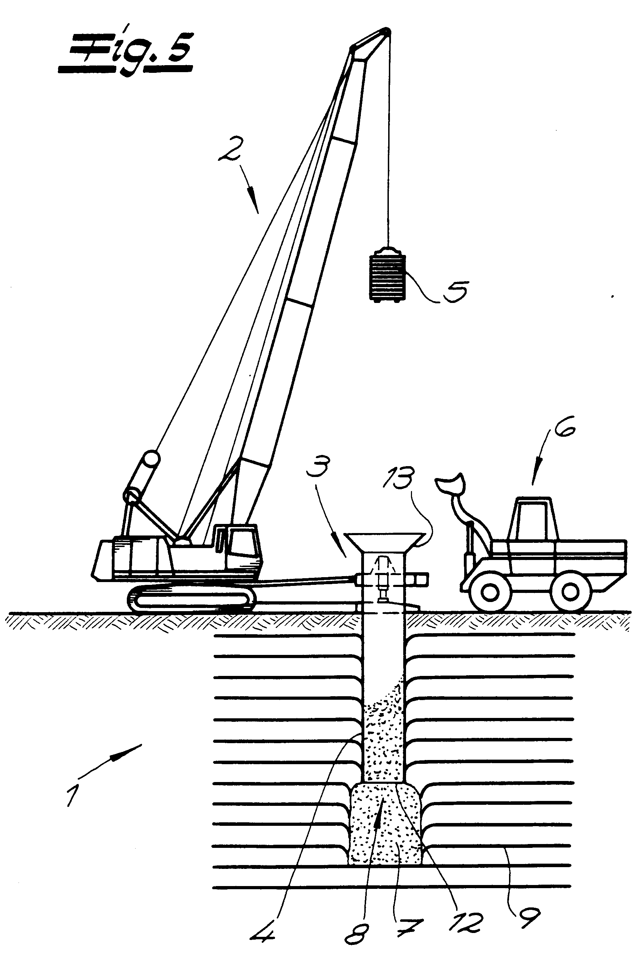

- Fig. 5: den Gegenstand nach Fig. 4 nach der Beschickung des Rohres mit Frischmüll,

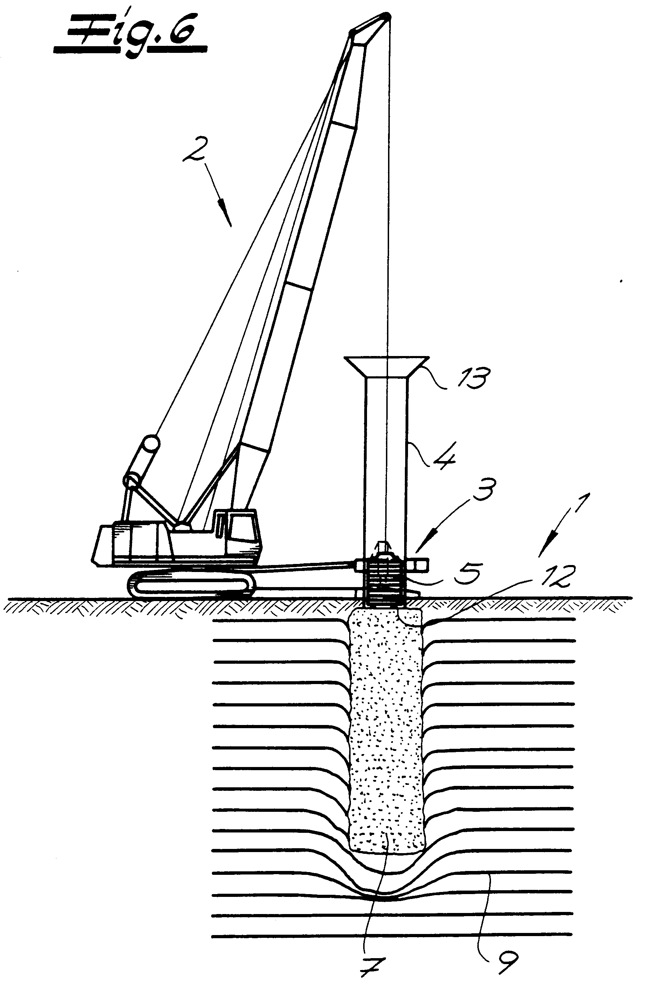

- Fig. 6: den Gegenstand nach Fig. 5 am Ende der Herstellung einer aus Frischmüll verdichteten Säule im Altmüll,

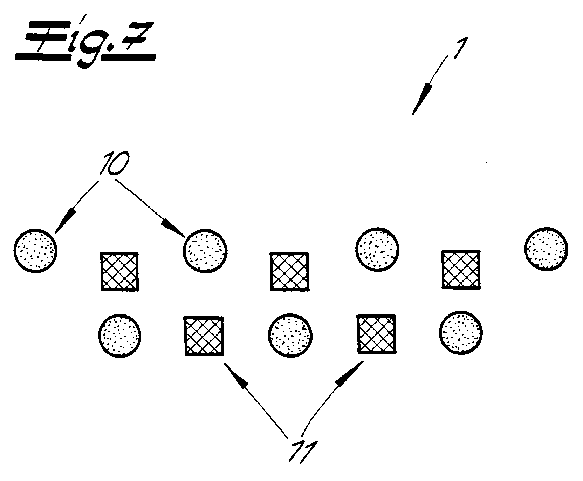

- Fig. 7: ein Raster von Verdichtungspunkten mit Tiefenverdichtung und Oberflächenverdichtung, und

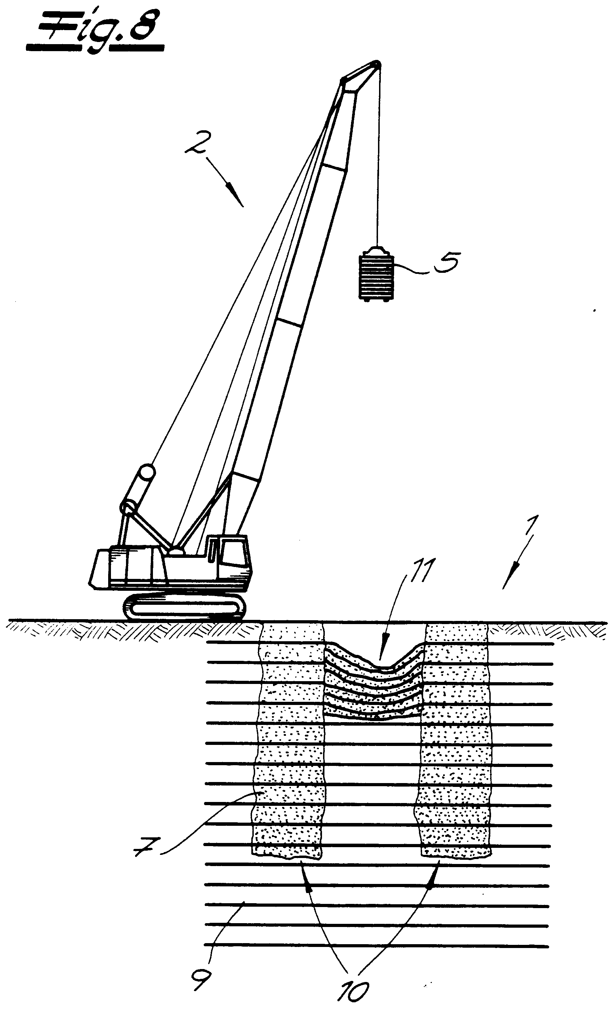

- Fig. 8: die Situation der Fallplattenverdichtung nach Fertigstellung der Tiefenverdichtung.

In den Figuren ist eine Deponie 1 aus mehreren Lagen von vorverdichtetem Altmüll angedeutet, ferner ein Seilbagger 2 mit einer gelenkig angeschlossenen Zieh-, Dreh- und Druckvorrichtung 3, welche dazu dient, ein Rohr 4 in den Deponiekörper einzudrehen. Im Rahmen der Erfindung besteht auch die Möglichkeit, das Rohr 4 mittels einer oszillierenden Maschine niederzubringen. An den Seilbagger 2 ist ein Fallgewicht 5 angehängt, welches in dem Rohr 4 operiert. Außerdem ist ein Beschickungsgerät 6 für Frischmüll vorhanden. Zum Verdichten und Verfestigen der Deponie 1 Bus vorverdichtetem Altmüll wird im Wege der Erschließung einer zusätzlichen Aufnahmekapazität für Frischmüll 7 das wiederzuziehende Rohr 4 unter Bildung eines Hohlraums 8 in die Deponie 1 bzw. den Altmüll niedergebracht, der entstehende Hohlraum 8 mit Frischmüll 7 verfüllt und der Frischmüll 7 mittels des Fallgewichtes verdichtet. Das geschieht im einzelnen so, daß ein unten offenes Rohr 4 niedergebracht wird und das Fallgewicht in dem Rohr 4 geführt ist. Das Rohr 4 wird abschnittsweise bis zum Erreichen einer vorgegebenen Endtiefe vorgetrieben. Nach Maßgabe des abschnittsweisen Rohrvortriebs wird Altmüll 9 mittels des Fallgewichtes 5 aus dem Rohr 4 unten heraus und seitlich verdrängt. Das Rohr 4 wird nach Erreichen der Endtiefe abschnittsweise mit Frischmüll 7 beschickt. Danach wird das Rohr 4 nach Maßgabe der Frischmüllbeschickung abschnittsweise gezogen und dabei der Frischmüll 7 mittels des Fallgewichtes 5 verdichtet. Dieser Vorgang wird sukzessive bis zum Erreichen der Deponieoberfläche bzw. des oberflächennahen Deponiebereiches wiederholt. Im Bereich der Deponie 1 wird eine rasterartige Tiefenverdichtung mittels des Rohres 4 und des Fallgewichtes 5 vorgenommen. Zwischen den Tiefenverdichtungspunkten 10 wird eine Fallplattenverdichtung 11 im oberflächennahen Bereich der Deponie 1 durchgeführt.

Das Rohr 4 hat - wie bereits erwähnt - ein unten offenes Rohrende 12. Das obere offene Rohrende ist als Trichter 13 ausgebildet bzw. von einem Trichter umgeben. Im übrigen ist das Rohr 4 innen zylindrisch und glatt ausgeführt. Das untere Rohrende 12 bzw. der Rohrschuh kann mit Vortriebswerkzeugen bestückt sein, konisch ausgebildet sein und außenseitig eine helixförmige Wendel unter Beibehaltung des Rohraußendurchmessers aufweisen, was nicht gezeigt ist.

## Patentansprüche

1. Verfahren zum Verdichten einer Deponie aus vorverdichtetem Altmüll im Wege der Erschließung einer zusätzlichen Aufnahmekapazität für Frischmüll, wonach unter Bildung eines Hohlraumes ein wiederzuziehendes Rohr in die Deponie niedergebracht und der entstandene Hohlraum mit Frischmüll verfüllt und der Frischmüll mittels eines Fallgewichtes verdichtet wird, **dadurch gekennzeichnet**
daß ein unten offenes Rohr niedergebracht wird und das Fallgewicht in dem Rohr operiert, daß das Rohr abschnittsweise bis zum Erreichen einer vorgegebenen Endtiefe vorgetrieben wird und nach Maßgabe des abschnittsweisen Rohrvortriebs Altmüll mittels des Fallgewichtes aus dem Rohr unten heraus und seitlich verdrängt wird, daß das Rohr nach Erreichen der Endtiefe abschnittsweise mit Frischmüll beschickt wird, daß das Rohr nach Maßgabe der Frischmüllbeschickung abschnittsweise gezogen und der Frischmüll mittels des Fallgewichtes verdichtet wird, und daß dieser Vorgang sukzessive bis zum Erreichen der Deponieoberfläche wiederholt wird.

2. Verfahren nach Anspruch 1, dadurch gekennzeichnet, daß das Rohr abschnittsweise gezogen wird, während das Fallgewicht den jeweils eingefüllten Frischmüll verdichtet.

3. Verfahren nach Anspruch 1 oder 2, dadurch gekennzeichnet, daß die Oberfläche des jeweils verdichteten Altmülls und/oder Frischmülls über die Einsenkung des Fallgewichtes gemessen, zum Beispiel Impulsgeber kontrolliert und aufgezeichnet wird.

4. Verfahren nach einem der Ansprüche 1 bis 3, dadurch gekennzeichnet, daß eine rasterartige Tiefenverdichtung mittels des Rohres und des Fallgewichtes vorgenommen wird, und daß zwischen den Tiefenverdichtungspunkten und ggf. über den Tiefenverdichtungspunkten eine Fallplattenverdichtung im oberflächennahen Bereich der Deponie durchgeführt wird.

5. Vorrichtung zur Durchführung des Verfahrens nach einem der Ansprüche 1 bis 4, mit einem Rohr, dadurch gekennzeichnet, daß das unten offene Rohrende (12) als ein mit Zähnen, Stiften oder dergleichen Vortriebswerkzeugen bestückter Rohrschuh ausgebildet ist.

6. Vorrichtung nach Anspruch 5, dadurch gekennzeichnet, daß das unten offene Rohrende (12) als sich außenseitig konisch verjüngendes Ende und das Rohr innenseitig zylindrisch und glatt ausgeführt ist.

7. Vorrichtung nach einem der Ansprüche 5 bis 6, dadurch gekennzeichnet, daß das konische Rohrende (12) außenseitig eine helixförmige Wendel unter Beibehaltung des Rohraußendurchmessers aufweist.

8. Vorrichtung nach einem der Ansprüche 5 bis 7, dadurch gekennzeichnet, daß das obere offene Rohrende einen Trichter (13) aufweist.

9. Vorrichtung nach einem der Ansprüche 5 bis 8, dadurch gekennzeichnet, daß das Rohr (4) eine Länge bis zu 25 m und einen Durchmesser bis zu 3 m aufweist.

## Claims

1. A method of compacting a refuse dump comprising pre-compacted old refuse by way of opening up additional accommodation capacity for fresh refuse, according to which a withdrawable pipe is sunk into the refuse dump forming a cavity, the resulting cavity is filled with fresh refuse and the fresh refuse is compacted by means of a drop weight, characterised in that a pipe is sunk which is open at the bottom and the drop weight operates in the pipe, that the pipe is advanced section by section until a predetermined final depth is reached and old refuse is driven out of the pipe at the bottom and is displaced sideways by means of the drop weight, according to the advance of the pipe section by section, that after the final depth is reached the pipe is fed section by section with fresh refuse, that the pipe is withdrawn section by section according to the feeding with fresh refuse and the fresh refuse is compacted by means of the drop weight, and that this procedure is repeated successively until the surface of the refuse dump is reached.

2. A method according to claim 1, characterised in that the pipe is withdrawn section by section whilst the drop weight compacts the fresh refuse which is introduced each time.

3. A method according to claim 1 or 2, characterised in that the surface of the old refuse and/or fresh refuse which is compacted each time is measured via the sinking of the drop weight, is checked, by pulse generators for example, and is recorded.

4. A method according to any one of claims 1 to 3, characterised in that a grid-like subsurface compaction is effected by means of the pipe and the drop weight, and that drop plate compaction is effected, between the subsurface compaction points and optionally above the subsurface compaction points, in the region near the surface of the refuse dump.

5. An apparatus for carrying out the method according to any one of claims 1 to 4, comprising a pipe, characterised in that the bottom open pipe end (12) is constructed as a pipe shoe fitted with teeth, pins or similar driving tools.

6. An apparatus according to claim 5, characterised in that the bottom open pipe end (12) is constructed as an end which diminishes conically on its outside, and the pipe is of cylindrical, smooth construction on the inside.

7. An apparatus according to either one of claims 5 to 6, characterised in that the conical pipe end (12) has a helical spiral on the outside, whilst retaining the pipe outside diameter.

8. An apparatus according to any one of claims 5 to 7, characterised in that the top open pipe end has a hopper (13).

9. An apparatus according to any one of claims 5 to 8, characterised in that the pipe (4) has a length up to 25 m and a diameter up to 3 m.

## Revendications

1. Procédé de compactage d'une décharge constituée de vieilles ordures précompactées, en vue de la réalisation d'une capacité d'absorption supplémentaire pour des ordures fraîches, selon lequel par formation d'une cavité, un tube à retirer ensuite, est descendu dans la décharge et la cavité formée est remplie d'ordures fraîches et les ordures fraîches sont compactées au moyen d'une masse tombante, caractérisé en ce qu'un tube ouvert vers le bas est descendu et la masse tombante opère dans le tube de manière que le tube soit poussé vers l'avant, tronçon par tronçon, jusqu'à atteindre une profondeur définitive donnée et en fonction de l'avance du tube tronçon par tronçon, les vieilles ordures sont chassées du tube vers le bas et latéralement, au moyen de la masse tombante, en ce que lorsque la profondeur définitive est atteinte, le tube est chargé tronçon par tronçon d'ordures fraîches, en ce qu'en fonction du chargement en ordures fraîches, le tube est tiré tronçon par tronçon et les ordures fraîches sont compactées au moyen de la masse tombante, et en ce que cette opération est renouvelée successivement jusqu'à ce que soit atteinte la surface de la décharge.

2. Procédé selon la revendication 1, caractérisé en ce que le tube est tiré tronçon par tronçon, tandis que la masse tombante compacte les ordures fraîches introduites chaque fois.

3. Procédé selon la revendication 1 ou 2, caractérisé en ce que la surface des vieilles ordures compactées et/ou des ordures fraîches est mesurée, par exemple l'enfoncement de la masse tombante, et contrôlée par exemple au moyen de transmetteurs d'impulsions et enregistrée.

4. Procédé selon l'une des revendications 1 à 3, caractérisé en ce qu'un compactage en profondeur, du type d'une trame, est effectué au moyen du tube et de la masse tombante, et en ce qu'entre les points de compactage de profondeur et éventuellement au-dessus des points de compactage en profondeur, il est procédé à un compactage par plaque en chute libre, dans la zone proche de la surface de la décharge.

5. Dispositif pour la mise en oeuvre du procédé selon l'une des revendications 1 à 4, avec un tube, caractérisé en ce que l'extrémité (12) du tube, ouverte à la partie inférieure, est conformée en sabot de tube, équipé de dents, broches ou outils d'avance similaires.

6. Dispositif selon la revendication 5, caractérisé en ce que l'extrémité (12) du tube, ouverte à la partie inférieure, est réalisée en tant qu'extrémité se rétrécissant coniquement sur le côté extérieur et le tube est cylindrique et lisse sur le côté intérieur.

7. Dispositif selon la revendication 5 ou 6, caractérisé en ce que l'extrémité (12) conique du tube présente sur le côté extérieur une spirale en forme d'hélice, tout en conservant le diamètre extérieur du tube.

8. Dispositif selon l'une des revendications 5 à 7, caractérisé en ce que l'extrémité supérieure, ouverte, du tube présente une trémie (13).

9. Dispositif selon l'une des revendications 5 à 8, caractérisé en ce que le tube (4) a une longueur pouvant aller jusqu'à 25 m et un diamètre pouvant aller jusqu'à 3 m.
